# EUROPEAN PATENT APPLICATION

(11) **EP 4 813 609 A1**
(43) Date of publication of application: **30.09.2026**
(21) Application number: 24893657.7
(22) Date of filing: 21.11.2024
(51) Int. Cl.: B29C 64/10, B22F 12/82, B33Y 30/00

(54) **PROCESS AND SYSTEM FOR RESETTING THE MANUFACTURE OF ADDITIVE MANUFACTURING PARTS**

(30) Priority: 23.11.2023 ES 202330965
(71) Applicant: M. Torres Diseños Industriales, S.A.U., 31119 Torres De Elorz (Navarra) (ES)
(72) Inventor: TORRES MARTINEZ, Manuel, deceased (ES)
(74) Representative: Evens, Paul Jonathan
(86) International application number: PCT/ES2024/070726
(87) International publication number: WO 2025/109239

(57) **Abstract**

The present invention relates to a process for resetting the manufacture of parts generated by additive manufacturing that allows a second part generated on a first part to be bonded on said first part. The parts are bonded by resistive heating with conductive means to which a current that causes said resistive heating is applied. For this purpose, the energy flow to be supplied via the conductive means is determined, the conductive means are placed in at least one of the parts and the ideal temperature for bonding the parts is generated with control means. The invention further relates to a system for resetting the manufacture of additive manufacturing parts that carries out said method, comprising at least conductive means (110) as well as an electrical current control system to obtain the suitable parameters that ensure the quality of the bond.

## Description

### Technical field

The present invention relates to the technical sector of additive manufacturing. More specifically, it refers to a manufacturing process and system that allows the generation of a second part by means of additive manufacturing on a first part manufactured from a thermoplastic material.

### State of the art

Additive manufacturing is a process that offers a number of significant advantages over traditional manufacturing methods, including among said advantages flexibility in generating geometries, speed in manufacturing single parts or small batches, and cost reduction as it is an additive rather than extractive manufacturing technology, generating savings in starting material.

Within additive manufacturing, there is a line of equipment development focused on the design of systems for the manufacture of large components. The use of these systems is beginning to extend in the fields of tooling and complementary equipment manufacturing, to manufacturing processes in sectors such as aeronautics, wind power or shipbuilding, where there are certain needs that the process is capable of meeting. While some critical points for the efficient operation of these systems - such as the elimination of heat treated chambers or the generation of systems with varying material deposition widths - have been resolved, there are currently still significant limitations that prevent further extension. Additive manufacturing processes of large components involve time-consuming methods and the use of materials of considerable cost; furthermore, the current robustness of these processes is still insufficient to guarantee an uninterrupted method, so it is possible that events may occur that lead to the manufacturing process being stopped, which means that the part generated up to that point is no longer valid, usually resulting in discarding same with the subsequent costs and loss of material.

Moreover, and in relation to the previous point, in order to achieve very large dimensions, there are processes now that allow the mechanical bonding of several components created by means of additive manufacturing processes. They are often tedious processes that, when implemented, often lead to cost overruns of equivalent products manufactured by traditional methods, which dilutes or eliminates the initial advantages of such processes. In addition, there may be watertightness or mechanical strength requirements that imply the need for continuity of material in the bonding area. Therefore, a solution is required that allows for agile and efficient bonding of components created by means of additive manufacturing, and moreover, that allows for the resumption of manufacturing processes on the part in progress, so that this technology can at least partially circumvent the current barriers and offer its full advantages to the sectors concerned.

Solutions exist in the industry for bonding thermoplastic-based components via processes such as welding, although their application to additive manufacturing components has been very limited. However, the implementation of these conventional methods is not sufficient to achieve an acceptable bond between components manufactured by additive manufacturing, as these involve localised heat treatments and bonds that do not guarantee the final geometry of the part, nor the suitable strength of the bonding area, nor its leak-tightness, among other aspects.

### Object of the invention

Considering the purpose set out in the preceding section, one of the aspects of the present invention is a process for resetting the manufacture of parts generated by additive manufacturing for the continuation of the manufacture of a part that has been interrupted, which will from then on have a first initial part already manufactured and a second part to be manufactured on that first part by means of additive manufacturing. The bonding of the layers of material is facilitated via a process using resistive heating with conductive means on the bonding surface of the parts, i.e. on the surface of the first part where the first layer of the second part is arranged. These conductive means will be connected to a power supply system for applying a current to cause such resistive heating. The process comprises the following steps. Firstly, the energy flow to be supplied via the conductive means is determined in order to achieve correct heat treatment of the bonding surface between a first part and the first layer of a second part. The determination of the energy flow to be supplied via the conductive means and the arrangement of the conductive means will be carried out depending on the composition, structure of the conductive means, the geometry of the first manufactured part and the second part to be manufactured, the thermal conductivity of the material to be bonded, the rheology of the material, the environmental conditions and/or other material and process parameters. The conductive means are then placed in the determined area and with the determined arrangement. Said arrangement may be the placement thereof on the bonding surface of the first part to be bonded, preferably with said conductive means being fixed on the bonding surface of the first part.

Preferably, the fixing of the conductive means to the bonding surface of the first part is achieved by welding the conductive means to the surface of the part, for example using material filler or directly on the base material of the part; by adhesive means; by mechanical means such as clamps or positioning elements; or by fitting the conductive means into cavities made for this purpose in the bonding surface of the part to be bonded.

Preferably, the fixing step is implemented automatically via an automated system.

When the conductive means do not remain on the surface by themselves, said fixing allows them to remain stable throughout the process.

Finally, the conductive means are connected to an electrical power supply system, preferably by means of terminals that must be correctly located outside the part in order to be accessible (although it is not ruled out that the terminals are embedded inside), and electrical current is applied by control means, which preferably control the voltage, intensity and frequency of the electrical current, generating resistive heating of the conductive means by the Joule effect and the subsequent heat treatment of the bonding surface of the first part.

The application of this electrical current in the properly positioned conductive means allows the heat generation step to be performed so that the temperature across the entire bonding surface is homogeneous, avoiding the generation of internal stresses in the material and other undesirable aspects for the subsequent behaviour of the bond resulting from non-homogeneous local heating in the bonding process, and improving the cohesion, strength and subsequent watertightness of the final assembled part in the bonding area.

The second part to be bonded is generated by additive manufacturing on the bonding surface of the first part by means of a material application system, such as an extrusion nozzle. This configuration allows the continuation of an additive manufacturing process of a part that was interrupted, being able to continue the manufacture of the part by heating the bonding surface of the first part and applying new material also at a temperature that allows the bonding of both parts, until manufacture is complete.

The application of pressure to this second part generated by additive manufacturing on the first part for correct adhesion can be applied by the material application system, such as the extrusion nozzle, the pressure applied being controlled by the control means. It is also envisioned, in a non-limiting manner, that said pressure is applied by pressure rollers connected to said material application system for this purpose, but could be applied by means of other compaction mechanisms, such as a movable tamper.

A firm bond is thereby achieved between the first part and the first layer of the new manufactured part, which will allow completion of the manufacture thereof. The process can be iterative and use multiple process resets to complete the manufacture of large parts.

Preferably, the process will be performed for parts made of the same material, although it is also envisioned for parts made of different materials; in the latter case, known control means for controlling materials will allow the temperature for the correct bonding between parts to be reached and maintained.

According to another feature, in order to reach the bonding temperature, it is provided that an increasing electrical supply is applied, with the temperature gradually being raised by the conductive means to the optimum temperature at the bonding surface of the first part for resetting manufacture, for example in the form of a ramp. The heat flow over the bonding surface is thereby controlled by means of the intensity applied by the control means to ensure the quality of the bond between the first part and the beginning of the second part without generating stresses, material degradation or another undesired detrimental effect.

In a preferred embodiment of the invention, the conductive means are embedded, inserted or inlaid in the bonding surface where they are integrated within the first part, thus being able to constitute a structural reinforcement element or additional mechanical strength.

Another further feature of the process of the invention relates to the fact that it is possible to reinforce the weld between the last layer of the first part and the first layer of the reset part of the second part in a subsequent process once the final part has been fully manufactured. For this purpose, the conductive means installed and embedded in the part allow the reheating of the bonding surface by means of resistive heating in order to improve, if necessary, the interdiffusion of the polymer chains and to achieve a higher quality weld. In this post-welding process, it may be necessary to apply such pressure that the two bonding surfaces are pressed together. Preferably, said mutual approximation pressure of the two layers will be achieved by mechanical, pneumatic or hydraulic systems, or any combination thereof.

Said pressure can be applied manually or can be automated by means of the control means.

Optionally, depending on the state of the bonding surface of the first part or base part, it is provided that the bonding surface of the first layer can be conditioned prior to the placement of the conductive means. In this bonding surface conditioning step, actions such as surface machining of the base layer, generation of cavities, recesses or recesses to at least partially arrange the conductive means therein or to facilitate the process for the automatic application of the conductive means, cleaning of said bonding surface, or the application of conditioning coatings that facilitate or improve the bonding of the two parts together, insulating coatings, protective coatings or adhesive agents can be carried out.

Preferably, the conditioning of the bonding surface will be performed by means of an automated process, using numerically controlled machining systems or other automated options to do so.

According to another aspect, the invention also relates to a system for resetting the manufacture of parts generated by additive manufacturing that performs a process according to the aforementioned features. Said system comprises conductive means, forming a specific electrical circuit by means of connecting terminals to a power supply system. The system also comprises a regulator of the power that is supplied to the conductive means for the resistive heating thereof so as to generate the suitable temperature for bonding the parts by control means. It also comprises a material application system for generating the second part by additive manufacturing.

The conductive means comprise the connection terminals for the coupling of the power regulator, these connection terminals being in an accessible external position.

According to another feature of the system of the invention, when the second part is generated by additive manufacturing on the bonding surface of the first part, the system comprises a material application system, such as an extrusion nozzle, and/or pressure application means in the form of a roller, the pressure application means being controlled by the control unit, so that they deposit a successive layer as they perform this displacement according to a given path.

According to a further feature of the system, the conductive means consist of systems of wires, strands or webs based on materials such as carbon fibre and/or copper wire, so that they allow resistive heating and can be embedded in the bonding surface due to their properties.

With regard to the material of the parts, said material is or preferably includes a thermoplastic material. This thermoplastic material may or may not have a filler and, if it does have a filler, said filler may preferably be carbon fibre and/or glass fibre, either individually or in combination.

According to a feature of the invention, the conductive means would be embedded within the bond, thereby improving the structural behaviour of the bond. As it is also a typical composite material reinforcement, a bonding process is defined which in turn allows a correct impregnation of said carbon fibre-based conductive means, reinforcing and improving the mechanical response in the bonding area.

According to another feature of the additive manufacturing system, the conductive means may comprise an electrical insulation; it may comprise all or only part of the conductive means. This electrical insulation may comprise a web, fabric or sleeve of a non-electrically conductive structural material and may preferably, but not exclusively, include glass fibre; the insulation may also comprise a non-conductive lacquer. It can thereby be used for parts made of electrically conductive materials to avoid dissipation of electricity from the conductive material to the part or to another point in the electrical circuit, which could modify the design parameters and generate unwanted current peaks, for example. This insulation in turn eliminates contact problems in the case of using conductive elements connected in parallel.

Additionally, it is provided that the system comprises temperature sensors connected to the control means so that the ideal temperature is generated and maintained during the bonding process for bonding the parts.

Preferably, for applying pressure the system comprises at least one pressure tool for actively applying bonding pressure to the first part, and/or at least one tool for applying pressure to the second part upon completion of manufacture, so that the contact surfaces thereof form a firm and uniform bond. In particular, the pressure to be applied on the first part may be applied during manufacture or upon completion of manufacture.

Preferably, the manufacturing system comprises a subsystem for applying the conductive means automatically to the bonding surface of the part by fixing and positioning said conductive means. The subsystem comprises a conductive material unwinding module, a conductive material pulling module, a heat treatment module, a conductive material cutting module and/or a conductive material compacting module. The conductive means are fed from the unwinding module to the pulling module, which pulls the conductive material.

The heat treatment module allows the temperature of the surface and/or the conductive means to be raised so that the conductive means can adhere to same via infrared lamps, lasers, ultrasonic or microwave systems, or any other technology that allows the necessary operating temperatures to be reached, depending on the specific material of the parts to be manufactured. The conductive means and/or the surface heat treatment process can be performed before or after applying the conductive means and can be performed continuously or discretely along the surface.

The cutting module allows the supply of the conductive means in the system to be interrupted in order to cut and reset the process if necessary. The cutting module will preferably be based on mechanical cutting with blades driven by electronic, pneumatic or hydraulic systems, although it could also be based on laser cutting systems or other equivalent technologies.

The compacting module ensures the necessary pressure for this adhesion to take place correctly in the area of application of the conductive means on the part to be bonded. In a preferred configuration, the compacting module consists of a compacting roller that also performs the functions of a pulling module, although other options such as movable tampers are feasible.

According to another feature of the system, the conductive means application subsystem incorporates a conductive means tension control system via active means such as rocker arms or other options, or via passive means such as friction rollers, which allow the tension of the conductive means to be controlled in the process of applying same.

According to another feature of the system, the conductive means application subsystem incorporates a system for applying adhesive or binder prior to the application of the conductive means via spraying or direct application via a nozzle or the like. The adhesive or binder will be the material that fixes the conductive means to the surface, which may or may not require heat treatment of the surface for the correct operation or curing thereof.

Preferably, it is provided that the positioning system incorporates a series of vision means such as digital scanners that allow the initial evaluation of the surface to be covered, the system being capable, in an automated manner, of identifying the surface to be covered, defining the path to be followed by the conductive means application system and executing said application of material.

According to an alternative embodiment of the invention, the conductive means application system is supported and moved via the use of an automated system, preferably a robot, although other displacement systems such as Cartesian systems or gantry-type configurations are also feasible for the implementation of the process.

It is envisioned that the conductive means application system can be either integrated into the system for resetting parts generated by additive manufacturing, or be arranged independently of same.

### Description of the figures

The attached drawings illustrate, by way of non-limiting example, the system for resetting the manufacture of additive manufacturing parts according to the invention. In said drawings:
Figure 1 is a block diagram of a preferred embodiment of the present invention.
Figure 2 is a generic circuit representing a preferred embodiment of a conductive means subsystem connected to a power regulator.
Figures 3a-b to 6a-b depict four examples of conductive means subsystems arranged on a first base part and their corresponding electrical circuits.
Figure 7 is a block diagram of an embodiment of the conductive means application subsystem.
Figure 8 is an exemplary embodiment of the automated conductive means placement subsystem.

### Detailed description of the invention

A detailed description of the invention will be provided below in reference to the figures listed above and according to non-limiting practical examples of the invention.

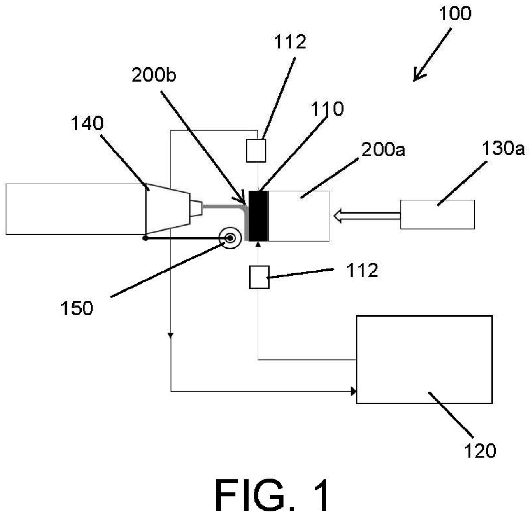

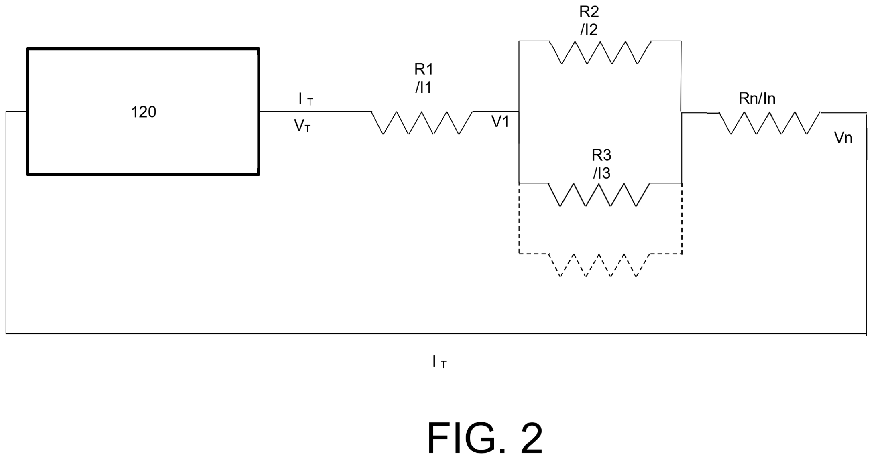

Figure 1 schematically shows a practical embodiment of a system (100) in which a first layer of material of a second part (200b) is arranged on the bonding surface of a first base part (200a) as it is being manufactured or generated, i.e., material deposition is continued to continue additive manufacturing once the bonding temperature of the already manufactured first part (200a) has been reached. This generation or manufacture of the successive layer (200b) can be produced by means of any device or apparatus of the extruder or 3D printer type or the like, such as filament, pellet or continuous fibre extrusion, material deposition, material lamination or other options existing in the state of the art; in one of the preferred variants of this embodiment (shown in Figure 2), the device generating the successive layer (200b) is an extrusion nozzle (140). This device (in this specific though non-limiting case, the nozzle (140)) will comprise displacement means to move over the geometry of the bonding surface of the first base part (200a). As it is displaced, pressure can be applied in a direction perpendicular to the bonding surface of the first part (200a), which can be applied by the nozzle (140) itself or by separate means such as the roller (150) illustrated in said figure.

Continuing with Figure 1, said figure also depicts conductive means (110) which are arranged on the bonding surface of the first base part (200a) and fixed to same. According to one embodiment of the invention, the existence of a scanner is provided for examining said bonding surface for the correct arrangement of the conductive means (110). These conductive means (110) are made up of elements provided with a certain electrical resistance which, by the Joule effect, generate a heat flow when an electrical current is passed through same to increase the their own temperature and that of their surroundings. This temperature increase will be communicated to the first base part (200a) and, combined with the aforementioned pressure in the direction of the first part (200a), will produce the bonding of said parts.

According to a preferred embodiment, there is incorporated a pressure tool (130a) which will apply pressure on the first part (200a) once the second final part (200b) is already manufactured, forming the final part assembly, additionally being able to apply a compensating pressure on the second part (200b) by means of a pressure tool not depicted in the figures, or being able to incorporate only one pressure tool (not shown in the figures) only on the second part (200b).

The conductive means (110) also comprise connection terminals (112) for coupling a power regulator (120) (intensity, voltage or power regulation) that will allow an adjustment of the energy supplied to the conductive means to control its rate of temperature increase and the desired target value thereof by means of the control means. The power regulator (120) may be a regulator having a built-in source supplying the necessary current or power to be regulated, or it may be a simple regulator connected to a suitable separate source. In addition, the inclusion of sensors is provided for determining the temperature of the parts (200a, 200b) on the bonding surface. The connection terminals (112) are provided to be located on the outside of the physical contact or bonding interface of the two parts (200a, 200b), so that they are easily accessible for connection to the controller (120).

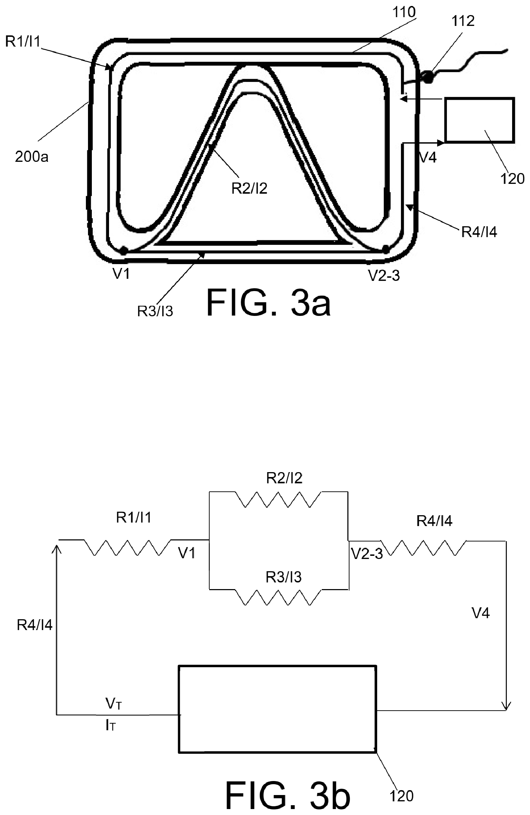

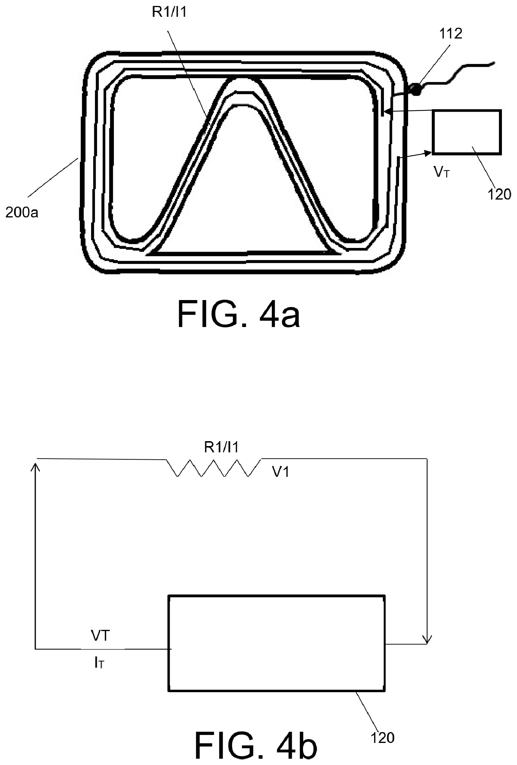

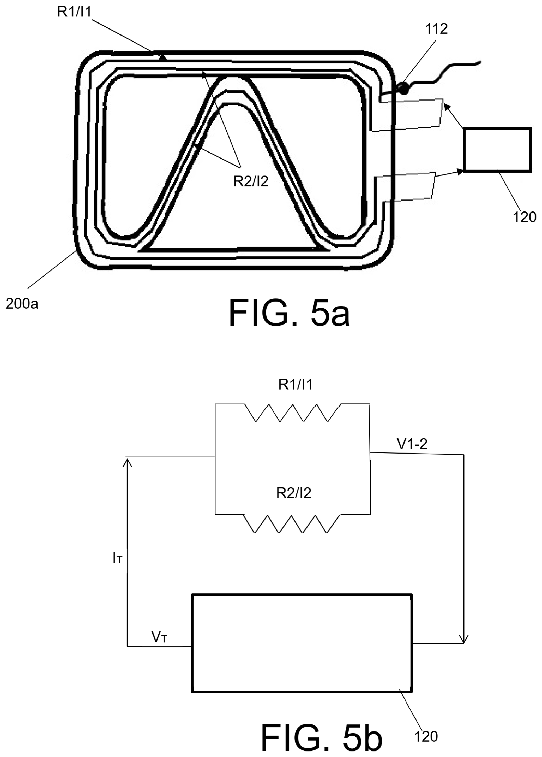

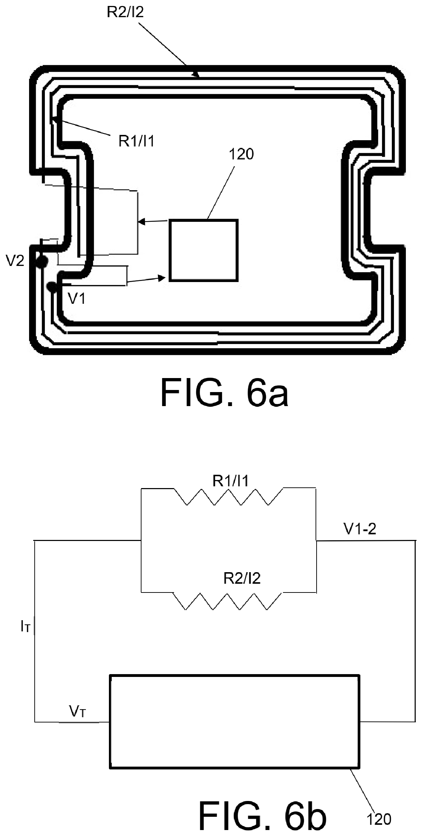

Figure 2 shows a generic diagram of the conductive means (110) in the form of an electrical circuit connected to the power regulator (120). Each resistive element of the conductive means is depicted by means of an electrical resistance in said circuit and Figures 3 to 6 illustrate specific examples of physical arrangements of the conductive means on the bonding surface of the first base part (200a) and the corresponding electrical circuits thereof.

As for the material preferred for the electrical conductors, carbon fibre web or roving is preferred. Roving refers to a tuft of continuous filaments of fibres. In turn, "web" refers to short strands of fibre bundled together. In another variant, the conductive means (110) could be or could comprise copper wires.

The material of the parts (200a, 200b) will preferably be a thermoplastic with or without carbon fibre, glass fibre or other fillers.

According to an alternative embodiment of the invention, the conductive element is electrically insulated by means of a web or fabric of a non-conductive structural material such as glass fibre, or, if copper is used, for example, by means of a lacquer. It can thereby be used for components manufactured with electrically conductive materials to avoid dissipation of electricity from the conductive material to the parts (200a, 200b) or to another point in the electrical circuit, which could modify the design parameters and generate unwanted current peaks, for example. This insulation in turn eliminates contact problems in the case of using conductive means (110) connected in parallel.

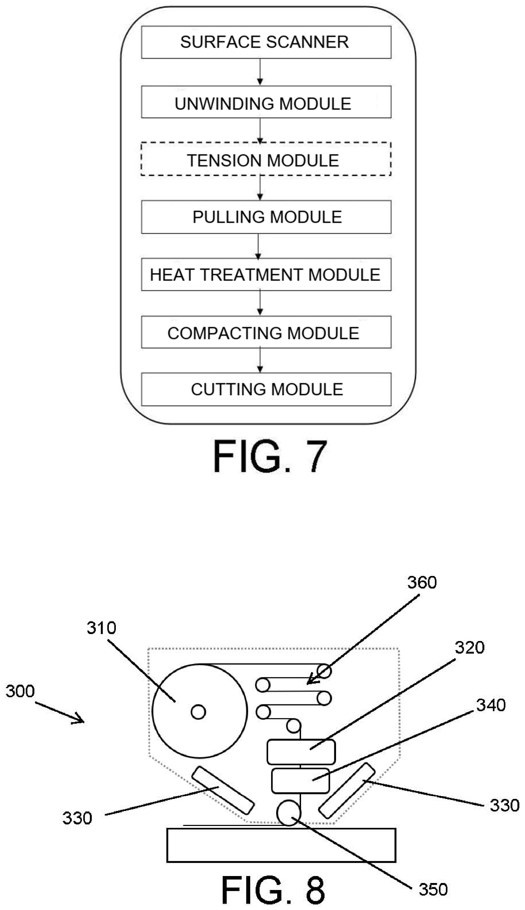

According to an alternative embodiment of the invention, the system (100) for resetting additive manufacturing parts comprises a subsystem for placing and fixing the conductive means (110) to the part (200a, 200b) automatically, so as to dispense with the operator in processes in which it is feasible. Thus, according to a practical embodiment of the invention, as can be seen in Figure 8, said subsystem (300) comprises an unwinding module (310), a pulling module (320), a heat treatment module (330), a cutting module (340) and a compacting module (350) for the conductive material of the conductive means (110).

According to the block diagram in Figure 7, the subsystem (300) scans the surface, and according to the information received, the control means of the subsystem (300) send a signal to the unwinding module (310) for the supply of conductive material by means of a pulling module (320). Preferably, for this purpose, the subsystem (300) comprises vision means such as digital scanners that allow the initial evaluation of the surface to be covered, the system being capable, in an automated manner, of identifying the surface to be covered, defining the path to be followed by the conductive means application system and executing said application of material.

Subsequently, prior to application, a heat treatment module (330) raises the temperature of the surface of the part (200a, 200b) and/or the conductive means via infrared lamps, lasers, ultrasonic or microwave systems, or any other technology that allows the necessary operating temperatures to be reached, depending on the specific material of the parts to be bonded.

Next, a compacting module (350) ensures the necessary pressure for this adhesion to take place correctly in the area of application of the conductive means (110) on the part (200a, 200b) to be bonded. Preferably, the compacting module comprises a compacting roller that also performs the functions of a pulling module, although other options such as movable tampers are feasible.

Finally, a cutting module (340) allows the supply of the conductive means (110) to be interrupted in order to cut and reset the process if necessary. The cutting module (340) comprises blades driven by electronic, pneumatic or hydraulic systems, although it could also be based on laser cutting systems or other equivalent technologies.

According to one design option, the subsystem (300) comprises a conductive means tension control system (360) via active means such as rocker arms or other options, or via passive means such as friction rollers, which allow the tension of the conductive means to be controlled in the process of applying same.

It is further envisioned that the subsystem (300) may be either integrated in the system (100) for resetting parts generated by additive manufacturing or be arranged independently of same.

## Claims

1. A process for resetting the manufacture of parts generated by additive manufacturing by applying resistive heating to said parts with conductive means (110), comprising the following steps:
- determining the energy flow to be supplied via the conductive means (110),
- arranging the conductive means (110) on the bonding surface of a first part (200a) manually or automatically,
- applying an electrical current by control means to the conductive means (110) so as to generate heat by the Joule effect, reaching a temperature suitable for bonding the first part (200a) and a second part (200b),
- applying a first layer of material of the second part (200b) to the heat treated bonding surface of the first part (200a), by means of an additive manufacturing system, so that it is bonded to the bonding surface of the first part (200a),
- applying successive layers of material after the first layer of material of the second part (200b) until manufacture is complete.

2. The process for resetting the manufacture of parts generated by additive manufacturing according to the preceding claim, wherein the conductive means (110) are embedded between the bonding surface of the first part (200a) and the second part (200b), being part of the finished product or part.

3. The process for resetting the manufacture of parts generated by additive manufacturing according to any of the preceding claims, wherein the heat generation step is performed by progressively raising the temperature to the bonding temperature for bonding the first part (200a) and the second part (200b).

4. The process for resetting the manufacture of parts generated by additive manufacturing according to any of the preceding claims, wherein the heat generation step is performed so that the temperature across the entire bonding surface is homogeneous.

5. The process for resetting the manufacture of parts generated by additive manufacturing according to any of the preceding claims, comprising a pressure application step for bonding the first part (200a) and the second part (200b).

6. The process for resetting the manufacture of parts generated by additive manufacturing according to claim 5, wherein the application of pressure for bonding the first part (200a) and the second part (200b) is performed by the material application system.

7. The process for resetting the manufacture of parts generated by additive manufacturing according to any one of the preceding claims, comprising a pressure and temperature application step in the bonding area after completion of manufacture, said pressure being applied via mechanical, pneumatic or hydraulic means or any combination thereof controlled by the control means.

8. The process for resetting the manufacture of parts generated by additive manufacturing according to any of the preceding claims, comprising a prior conditioning step for conditioning the bonding surface of the first part (200a).

9. A system (100) for resetting the manufacture of parts generated by additive manufacturing by applying resistive heating to said parts in accordance with a process according to any one of the preceding claims, comprising conductive means (110) with connection terminals (112) for connection to a power supply system, a power regulator (120) for regulating power supplied to the conductive means (110), with a material application system for generating the second part (200b) by additive manufacturing, and with control means for regulating the power so as to generate the suitable temperature for bonding the first part (200a) with the first layer of the second part (200b).

10. The system according to claim 9, comprising pressure application means for applying pressure on the first layer of material of the second part (200b) which are arranged in the material application system and/or pressure application means in the form of a roller (150), said pressure application means being controlled by the control unit.

11. The system (100) according to claims 9 and 10, comprising at least one pressing tool (130a) for applying bonding pressure to the first part (200a), and/or a pressing tool for applying pressure to the second part (200b) upon completion of manufacture.

12. The system (100) according to any one of claims 9 to 11, comprising a subsystem (300) for applying the conductive means (110) automatically, comprising a conductive material unwinding module (310), a conductive material pulling module (320), a heat treatment module (330), a conductive material cutting module (340) and/or a conductive material compacting module (350).

13. The system (100) according to the preceding claim, wherein the subsystem (300) comprises a voltage control module (360) for active or passive voltage control of the conductive material.

14. The system (100) according to the preceding claim, wherein the subsystem (300) comprises a system for applying adhesive or binder prior to the application of the conductive means (110).

15. The system (100) according to the preceding claim, wherein the subsystem (300) comprises vision means configured to evaluate the surface of the first part (200a) to be covered.
